# EUROPEAN PATENT APPLICATION

(11) **EP 4 442 934 A1**
(43) Date of publication of application: **09.10.2024**
(21) Application number: 23171776.0
(22) Date of filing: 05.05.2023
(51) Int. Cl.: E04H 4/16

(54) **ROBOT SWIMMING POOL CLEANER AND BLOCKAGE DEGREE DETECTION METHOD**

(30) Priority: 04.04.2023 CN 202310374324
(71) Applicant: Shenzhen Aiper Intelligent Co., Ltd, Shenzhen (CN)
(72) Inventor: Wang, Yang, Shenzhen (CN); Yu, Xueliang, Shenzhen (CN); Wang, Keke, Shenzhen (CN)
(74) Representative: Zaboliene, Reda

(57) **Abstract**

The present application provides a robot swimming pool cleaner provided with a filter and a blockage degree detection method of said filter. The robot swimming pool cleaner includes a controller (60), a housing (10), a filtering chamber (70), a water pumping device (80), a movable door (50), an elastic member (20) and a sensing device (40). The movable door (50) is rotatably connected to the housing and may close the water inlet, the elastic member (20) is used to maintain a state of the movable door closing the water inlet, and the sensing device (40) is used to detect the opening angle of the movable door. The opening angle information is used to detect the degree of blockage of the filtering chamber.

## Description

### Technical Field

The present application relates to the technical field of swimming pool cleaning devices, in particular to a robot swimming pool cleaner and a blockage degree detection method.

### Background

A swimming pool is a place where people engage in swimming exercise. During use of the swimming pool, there may be some garbage such as leaves, dust, grass, and hairs. Therefore, it is necessary to regularly clean the swimming pool. An existing robot swimming pool cleaner may perform swimming pool cleaning work, and it is usually provided with a cleaning mechanism and a garbage collecting mechanism. The cleaning mechanism may clean the bottom, walls and the like of the swimming pool, while the garbage collecting mechanism sucks water by a water pump and enables the pool water to pass through a filtering structure. The garbage in the pool water may be intercepted by the filtering structure and collected in a garbage bin.

The robot swimming pool cleaner with this working mode has such problems: while the amount of the garbage is accumulated to a certain extent, or some garbage covers the surface of the filtering structure, flowing of the pool water may be blocked, resulting in a decrease in the filtering ability of the robot swimming pool cleaner or inability to filter; and since these problems may not be found timely, the robot swimming pool cleaner is still continued to operate even if a water flow is severely blocked, resulting in the situation of ineffective work for a long time.

### Summary

Therefore, the present application provides a robot swimming pool cleaner and a blockage degree detection method.

In a first aspect, the present application provides a robot swimming pool cleaner, including: a housing, a filtering chamber, a water pumping device, a movable door, an elastic member and an sensing device, herein the housing is provided with a water inlet and a water outlet communicated with the filtering chamber, the water pumping device is arranged between the water inlet and the water outlet, the movable door is rotatably connected to the housing and may close the water inlet, the elastic member is connected to the movable door and used to maintain a state of the movable door closing the water inlet, and the sensing device is connected to the movable door and used to detect the opening angle of the movable door; the controller is used to start the water pumping device, and start the sensing device; the real-time opening angle of the movable door detected by the sensing device is collected; the mapping relationship between the opening angle of the movable door and the blockage degree of the robot swimming pool cleaner is acquired; according to the real-time opening angles of a plurality of the movable doors collected within the setting time, it is judged whether the water pumping device works normally; if so, according to the real-time opening angles of the plurality of the movable doors collected within the setting time, it is judged whether the robot swimming pool cleaner is blocked; and if so, according to the mapping relationship and the real-time opening angles of the plurality of the movable doors collected within the setting time, the blockage degree of the robot swimming pool cleaner is determined.

As a further scheme for the robot swimming pool cleaner, the cross-section of the water inlet is a rectangle, the movable door is a square plate with the same shape as the cross-section of the water inlet, the length-width ratio of the square plate is greater than 3, and the movable door is rotatably mounted on one side, adjacent to the water inlet, of the filtering chamber.

As a further scheme for the robot swimming pool cleaner, the height of the water inlet is greater than or equal to the width of the water inlet.

In a second aspect, the present application further provides a blockage degree detection method, the method is used to detect the blockage degree of the filtering chamber of the robot swimming pool cleaner, and the method includes the following steps:
starting the water pumping device;
starting the sensing device;
collecting the real-time opening angle of the movable door detected by the sensing device;
acquiring the mapping relationship between the opening angle of the movable door and the blockage degree of the robot swimming pool cleaner;
according to the real-time opening angles of a plurality of the movable doors collected within the setting time, judging whether the water pumping device works normally;
if so, according to the real-time opening angles of the plurality of the movable doors collected within the setting time, judging whether the robot swimming pool cleaner is blocked; and
if so, according to the mapping relationship and the real-time opening angles of the plurality of the movable doors collected within the setting time, determining the blockage degree of the robot swimming pool cleaner.

As a further scheme for the blockage degree detection method,the step of, according to the real-time opening angles of the plurality of the movable doors collected within the setting time, judging whether the water pumping device works normally includes:acquiring a first opening angle range of the movable door during normal working of the water pumping device;determining a mean value of the real-time opening angles of the plurality of the movable doors collected within the setting time, and judging whether the mean value falls within the first opening angle range; andif so, judging that the water pumping device works normally.

As a further scheme for the blockage degree detection method, the step of, according to the real-time opening angles of the plurality of the movable doors collected within the setting time, judging whether the robot swimming pool cleaner is blocked includes:the mapping relationship between the opening angle of the movable door and the blockage degree of the robot swimming pool cleaner is used to indicate that a plurality of the blockage degrees corresponds to a plurality of second opening angle ranges one to one, and each second opening angle range is distributed within the first opening angle range;determining whether the mean value of the real-time opening angles of the plurality of the movable doors collected within the setting time falls within any one of the second opening angle ranges; andif so, determining that the robot swimming pool cleaner is blocked.

As a further scheme for the blockage degree detection method, the step of, according to the mapping relationship and the real-time opening angles of the plurality of the movable doors collected within the setting time, determining the blockage degree of the robot swimming pool cleaner includes:judging which second opening angle range the mean value of the real-time opening angles of the plurality of the movable doors collected within the setting time falls into, and then determining the blockage degree of the robot swimming pool cleaner according to the mapping relationship.

As a further scheme for the blockage degree detection method, the method further includes:setting a blockage alarm value, herein the blockage alarm value falls within one of the second opening angle ranges.

As a further scheme for the blockage degree detection method, the robot swimming pool cleaner further includes a blockage alarm, and the method further includes:judging whether the mean value of the real-time opening angles of the plurality of the movable doors collected within the setting time is less than or equal to the blockage alarm value; andif so, controlling the blockage alarm to issue an alarm.

As a further scheme for the blockage degree detection method, the robot swimming pool cleaner further includesa water pumping fault alarm, and the method further includes:if the water pumping device works abnormally, controlling the water pumping fault alarm to issue an alarm.

The robot swimming pool cleaner of the present application may detect the opening angle of the movable door by arrangingthe sensing device, thereby the problem of low filtering efficiency caused by blockage may be found timely, so that the subsequent operations such as alarm prompt or fault self-processing are performed; the blockage degree detection method of the present application utilizes two points: the opening angle of the movable door is affected by the water flow rate of the water inlet, and the water flow rate of the water inlet is related to the blockage degree of the filtering chamber. By collecting the opening angle of the movable door, the blockage degree of the filtering chamber is determined, and the method is simple and feasible; andaccording to the real-time opening angles of the plurality of the movable doors collected within the setting time, it is judged whether the water pumping device works normally, whether the robot swimming pool cleaner is blocked, and the blockage degree is determined, so results are more accurate.

### Brief Description of the Drawings

In order to describe specific implementation modes of the present application or technical schemes in existing technologies more clearly, drawings used in descriptions for the specific implementation modes or the existing technologies are briefly introduced below.

Apparently, the drawings in the following descriptions are some implementation modes of the present application. For those of ordinary skill in the art, other drawings may also be obtained according to these drawings without creative work.
Fig. 1 is a structure schematic diagram of a robot swimming pool cleaner in the present application;
Fig. 2 is a flowchart of a blockage degree detection method for the robot swimming pool cleaner in the present application; and

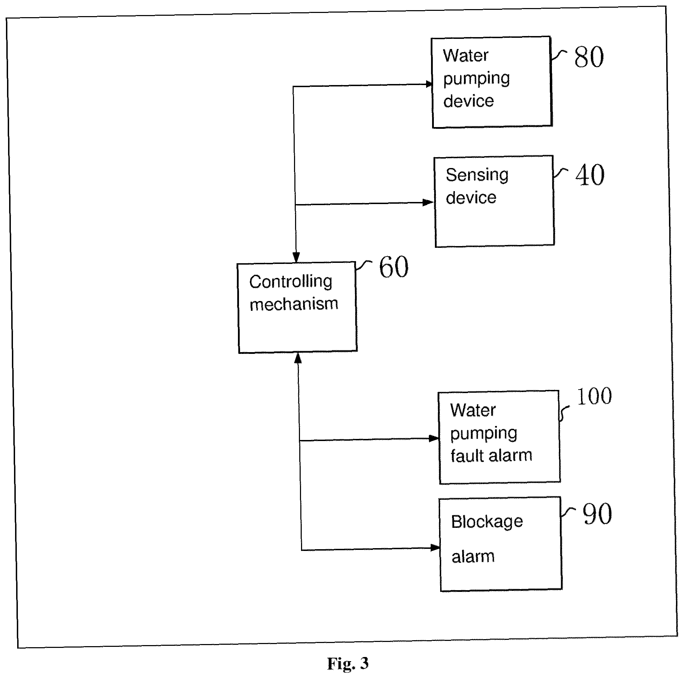

Fig. 3 is a circuit block diagram of the robot swimming pool cleaner in the present application.

Explanations of reference signs in the drawings:
10-Housing; 11-Water inlet; 12-Water outlet; 20-Elastic member; 21-Garbage collecting area; 22-Clear water area; 30-Filtering structure; 40-Sensing device; 41-Motor; 42-Impeller; 50-Movable door; 60-Controller; 70-Filtering chamber; 80-Water pumping device; 90-Blockage alarm; and 100-Water pumping fault alarm.

### Detailed Description of the Embodiments

The technical scheme of the present application is clearly and completely described below in combination with the drawings. Apparently, the described embodiments are a part of the embodiments of the present application, not all of the embodiments. Based on the embodiments in the present application, all other embodiments obtained by those of ordinary skill in the art without creative labor shall fall within the scope of protection of the present application.

In the description of the present application, it should be noted that the orientation or position relationship indicated by terms "center", "upper", "lower", "left", "right", "vertical", "horizontal", "inside", "outside" and the like is an orientation or position relationship based on the drawings, and is only for the convenience of describing the present application and simplifying the description, rather than indicates or implies that the device or element referred to must have a specific orientation, and be constructed and operated in the specific orientation. Therefore, it may not be understood as limitation to the present application. In addition, terms "first," "second," and "third" are only used for the purpose of the description, and may not be understood as indicating or implying relative importance.

In the description of the present application, it should be noted that unless otherwise specified and limited, terms "installation", "linkage", and "connection" should be understood broadly, for example, it may be a fixed connection, a detachable connection, or an integrated connection; it may be a mechanical connection, or an electrical connection; and it may be a direct connection, or an indirect connection by an intermediate medium, or it may be an internal communication between two elements. For those of ordinary skill in the art, the specific meanings of the above terms in the present application may be understood in specific circumstances.

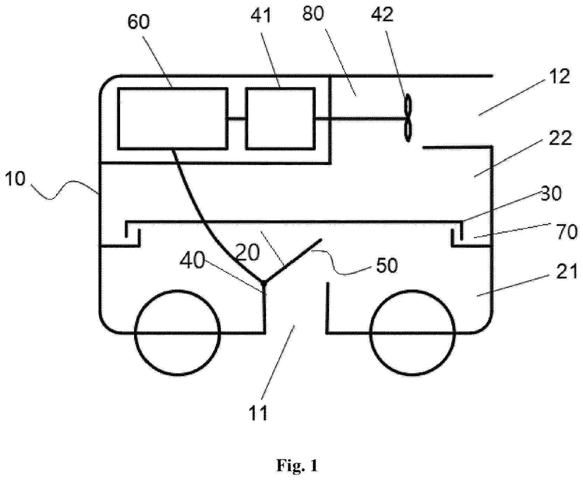

As shown in Fig. 1, a robot swimming pool cleaner includes a controller 60, a housing 10, a filtering chamber 70, a water pumping device 80, a movable door 50, an elastic member 20 and a sensing device 40; the filtering chamber 70 is internally provided with a filtering structure 30, the filtering structure 30 divides the filtering chamber 70 into a garbage collecting area 21 and a clear water area 22, and the filtering structure 30 is used to intercept garbage in water and allow clear water to pass through; the housing 10 is provided with a water inlet 11 communicated with the garbage collecting area 21 and a water outlet 12 communicated with the clear water area 22; the water pumping device 80 includes a motor 41 and an impeller 42, the motor 41 is sealed and arranged in the housing 10, an output shaft of the motor 41 is fixedly connected to the impeller 42, and the impeller 42 is arranged at the water outlet 12; the movable door 50 is provided with a rotating shaft, the rotating shaft is rotatablymounted on a side wall of the water inlet 11, and the movable door 50 is used to close the water inlet 11; the elastic member 20 is connected to the movable door 50 and used to maintain a state of the movable door 50 closing the water inlet 11, and the sensing device 40 is connected to the movable door 50 and used to detect the opening angle of the movable door 50; and the opening angle of the movable door 50 is the rotation angle of the rotatingshaft, while the movable door 50 completely closes the water inlet 11, the rotatingshaft is located in an original position, and the rotation angle refers to an angle at which the rotating shaft rotates relative to the original position.

The controller is used to start the water pumping device, and start the sensing device; the real-time opening angle of the movable door detected by the sensing device is collected; the mapping relationship between the opening angle of the movable door and the blockage degree of the robot swimming pool cleaner is acquired; according to the real-time opening angles of a plurality of the movable doors collected within the setting time, it is judged whether the water pumping device works normally; if so, according to the real-time opening angles of the plurality of the movable doors collected within the setting time, it is judged whether the robot swimming pool cleaner is blocked; and if so, according to the mapping relationship and the real-time opening angles of the plurality of the movable doors collected within the setting time, the blockage degree of the robot swimming pool cleaner is determined.

While the robot swimming pool cleaner moves inside the swimming pool, it may collect the garbage inside the swimming pool, and while it works, the water inlet 11 and the water outlet 12 should be located below the water level of the swimming pool. Firstly, the water pumping device works to continuously discharge the clear water from the clear water area 22 to the swimming pool, so that the negative pressure is continuously produced in the clear water area 22, thereby the pool water is promoted to continuously enter the garbage collecting area 21 from the water inlet 11, and then enter the clear water area 22. At this moment, the garbage enters the garbage collecting area 21 with the pool water, and remains in the garbage collecting area 21 due to the interception of the filtering structure 30, thus the cleaning of the pool water is achieved. While there is more and more garbage in the garbage collecting area 21, or some garbage covers the surface of the filtering structure 30, since the water is blocked by the garbage, the water flow into the water inlet 11 is reduced, thereby the pressure of the pool water on the movable door 50 is reduced, so that the opening angle of the movable door 50 is decreased. Based on this, the sensing device 40 is arranged to detect the opening angle of the movable door 50, the existing filtering situation may be known, and in the case that the filtering chamber 70 is blocked, the blockage degree may be judged according to the opening angle of the movable door 50.

Preferably, the cross-section of the water inlet 11 is a rectangle, the movable door 50 is a square plate with the same shape as the cross-section of the water inlet 11, the length-width ratio of the square plate is greater than 3, andthe rotating shaft is rotatablymounted on one side, adjacent to the garbage collecting area 21, of the water inlet 11. After experimental verification, while the length-width ratio of the movable door 50 is greater than 3, it is easy for the movable door 50 to stabilize in a certain position due to the influence of the stable water flow, without shaking up and down, thus the measurement deviation caused by shaking up and down of the movable door 50 is avoided.

Preferably, the height of the water inlet 11 is greater than or equal to the width of the water inlet 11. This design allows the water flow to maintain the same vertical upward direction whilethe water flow impacts the movable door 50, thereby the turbulent flow affecting the accuracy of the opening angle of the movable door 50 is prevented.

The elastic member 20 may be a pull spring, a torsion spring, or other elastic bodies, one end of the elastic member 20 is fixed on the housing 10, and the other end is fixed on the movable door 50.

The sensing device 40 is used to detect the angle of rotation of the rotating shaft; optionally, the sensing device 40 is a magnetic induction angle sensor, the magnetic induction angle sensor includes a Hall sensor and a steel magnet, the steel magnet is arranged on the rotating shaft, and the Hall sensor is sealed and arranged on the housing 10. By the rotation of the rotating shaft, the steel magnet is driven to rotate synchronously, thereby a change in magnetic flux is sensed by the Hall sensor, and the angle of rotation of the rotating shaft is detected; and optionally, the sensing device is a rotational potentiometer, the rotational potentiometer is sealed and arranged on the rotating shaft, and the rotating shaft drives an electric brush of the rotational potentiometer to slide on a resistor body during rotation, so that the rotation angle of the rotating shaft may be obtained finally.

The robot swimming pool cleanermay further include a controller 60, andthe controller 60 is electrically connected to the sensing device 40 and the water pumping device 80; and in some implementation modes, the controller 60 is also electrically connected to a blockage alarm 90 and/or a waterpumping fault alarm 100.

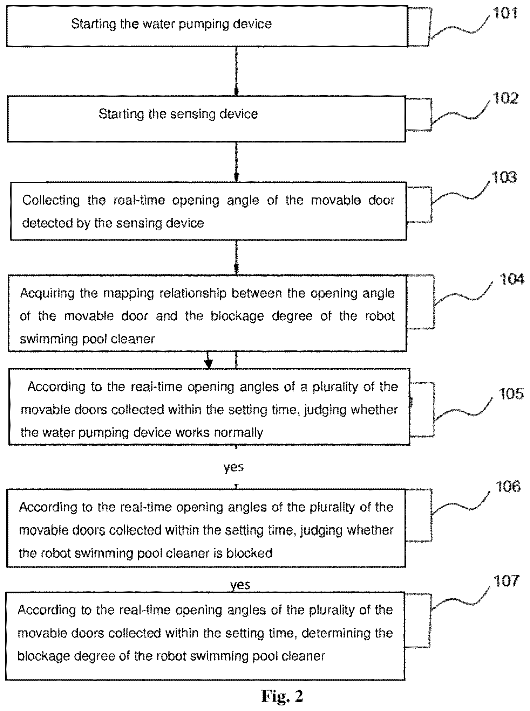

According to another aspect of the present application, a blockage degree detection method is provided, and used to detect the blockage degree of the filtering chamber of the above robot swimming pool cleaner. Referring to Fig. 2, the blockage degree detection method includes the following steps:
Step 101, starting the water pumping device 80;
Step 102, starting the sensing device 40;
Step 103, collecting the real-time opening angle of the movable door 50 detected by the sensing device 40;
Step 104, acquiring the mapping relationship between the opening angle of the movable door 50 and the blockage degree of the robot swimming pool cleaner;
Step 105, according to the real-time opening angles of a plurality of the movable doors 50 collected within the setting time, judging whether the water pumping device 80 works normally; if so, executing Step 106;
Step 106, according to the real-time opening angles of the plurality of the movable doors 50 collected within the setting time, judging whether the robot swimming pool cleaner is blocked; if so, executing Step 107; and
Step 107, according to the mapping relationship and the real-time opening angles of the plurality of the movable doors 50 collected within the setting time, determining the blockage degree of the robot swimming pool cleaner.

This method utilizes two points: the opening angle of the movable door 50 is affected by the water flow rate of the water inlet 11, and the water flow rate of the water inlet 11 is related to the blockage degree of the filtering chamber 70. By collecting the opening angle of the movable door 50, the blockage degree of the filtering chamber 70 is determined, and the method is simple and feasible; and according to the real-time opening angles of the plurality of the movable doors 50 collected within the setting time, it is judged whether the water pumping device 80 works normally, whether the robot swimming pool cleaner is blocked, and the blockage degree is determined, so results are more accurate.

Herein, the Step 105 may be specifically achieved as: acquiring a first opening angle range of the movable door 50 during normal working of the water pumping device 80; determining a mean value of the real-time opening angles of the plurality of the movable doors 50 collected within the setting time, and judging whether the mean value falls within the first opening angle range; and if so, judging that the water pumping device 80 works normally.

Herein, the Step 106 may be specifically achieved as: the mapping relationship between the opening angle of the movable door 50 and the blockage degree of the robot swimming pool cleaner is used to indicate that a plurality of the blockage degrees corresponds to a plurality of second opening angle ranges one to one, and each second opening angle range is distributed within the first opening angle range; determining whether the mean value of the real-time opening angles of the plurality of the movable doors 50 collected within the setting time falls within any one of the second opening angle ranges; and if so, determining that the robot swimming pool cleaner is blocked.

Herein, the Step 107 may be specifically achieved as: judging which second opening angle range the mean value of the real-time opening angles of the plurality of the movable doors 50 collected within the setting time falls into, and then determining the blockage degree of the robot swimming pool cleaner according to the mapping relationship.

While the robot swimming pool cleaner is severely blocked, its filtering efficiency is extremely low, and it should be stopped. In order to conveniently and timely find the situation that the robot swimming pool cleaner should stop running, the method further includes Step 108: setting a blockage alarm value, herein the blockage alarm value falls withinone of the second opening angle ranges. While the robot swimming pool cleanerfurther includes a blockage alarm 90, the method further includesStep 109: judging whether the mean value of the real-time opening angles of the plurality of the movable doors 50 collected within the setting time is less than or equal to the blockage alarm value; and if so, controlling the blockage alarm 90 to issue an alarm.

While the robot swimming pool cleanerfurther includes a water pumping fault alarm 100, in the Step 105, if not, executingStep 110: controlling the water pumping fault alarm 100 to issue an alarm.

While the robot swimming pool cleaner includes the controller 60, the controller 60 is used to perform the blockage degree detection method.

Apparently, the above embodiments are only for the purpose of clearly describing examples provided, rather than limiting the implementation modes. For those of ordinary skill in the art, different forms of changes or variations may also be made on the basis of the above descriptions. It is not necessary and may not be exhaustive of all implementation modes here. The apparent changes or variations arising from this are still within the scope of protection of the present application.

## Claims

1. A robot swimming pool cleaner, comprising a controller, a housing, a filtering chamber, a water pumping device, a movable door, an elastic member and an sensing device, wherein the housing is provided with a water inlet and a water outlet communicated with the filtering chamber, the water pumping device is arranged between the water inlet and the water outlet, the movable door is rotatably connected to the housing and can close the water inlet, the elastic member is connected to the movable door and used to maintain a state of the movable door closing the water inlet, and the sensing device is connected to the movable door and used to detect the opening angle of the movable door; the controller is used to start the water pumping device, and start the sensing device; the real-time opening angle of the movable door detected by the sensing device is collected; the mapping relationship between the opening angle of the movable door and the blockage degree of the robot swimming pool cleaner is acquired; according to the real-time opening angles of a plurality of the movable doors collected within the setting time, it is judged whether the water pumping device works normally; if so, according to the real-time opening angles of the plurality of the movable doors collected within the setting time, it is judged whether the robot swimming pool cleaner is blocked; and if so, according to the mapping relationship and the real-time opening angles of the plurality of the movable doors collected within the setting time, the blockage degree of the robot swimming pool cleaner is determined.

2. The robot swimming pool cleaner as claimed in claim 1, wherein the cross-section of the water inlet is a rectangle, the movable door is a square plate with the same shape as the cross-section of the water inlet, the length-width ratio of the square plate is greater than 3, and the movable door is rotatably mounted on one side, adjacent to the water inlet, of the filtering chamber.

3. The robot swimming pool cleaner as claimed in claim 2, wherein the height of the water inlet is greater than or equal to the width of the water inlet.

4. A blockage degree detection method, used to detect the blockage degree of the filtering chamber of the robot swimming pool cleaner, wherein it comprises the following steps:
starting the water pumping device;
starting the sensing device;
collecting the real-time opening angle of the movable door detected by the sensing device;
acquiring the mapping relationship between the opening angle of the movable door and the blockage degree of the robot swimming pool cleaner;
according to the real-time opening angles of a plurality of the movable doors collected within the setting time, judging whether the water pumping device works normally;
if so, according to the real-time opening angles of the plurality of the movable doors collected within the setting time, judging whether the robot swimming pool cleaner is blocked; and
if so, according to the mapping relationship and the real-time opening angles of the plurality of the movable doors collected within the setting time, determining the blockage degree of the robot swimming pool cleaner.

5. The method as claimed in claim 4, wherein the step of, according to the real-time opening angles of the plurality of the movable doors collected within the setting time, judging whether the water pumping device works normally comprises:
acquiring a first opening angle range of the movable door during normal working of the water pumping device;
determining a mean value of the real-time opening angles of the plurality of the movable doors collected within the setting time, and judging whether the mean value falls within the first opening angle range; and
if so, judging that the water pumping device works normally.

6. The method as claimed in claim 5, wherein the step of, according to the real-time opening angles of the plurality of the movable doors collected within the setting time, judging whether the robot swimming pool cleaner is blocked comprises:
the mapping relationship between the opening angle of the movable door and the blockage degree of the robot swimming pool cleaner is used to indicate that a plurality of the blockage degrees corresponds to a plurality of second opening angle ranges one to one, and each second opening angle range is distributed within the first opening angle range;
determining whether the mean value of the real-time opening angles of the plurality of the movable doors collected within the setting time falls within any one of the second opening angle ranges; and
if so, determining that the robot swimming pool cleaner is blocked.

7. The method as claimed in claim 6, wherein the step of, according to the mapping relationship and the real-time opening angles of the plurality of the movable doors collected within the setting time, determining the blockage degree of the robot swimming pool cleaner comprises:
judging which second opening angle range the mean value of the real-time opening angles of the plurality of the movable doors collected within the setting time falls into, and then determining the blockage degree of the robot swimming pool cleaner according to the mapping relationship.

8. The method as claimed in claim 7, wherein the method further comprises:
setting a blockage alarm value, wherein the blockage alarm value falls within one of the second opening angle ranges.

9. The method as claimed in claim 8, wherein the robot swimming pool cleaner further comprises a blockage alarm, and the method further comprises:
judging whether the mean value of the real-time opening angles of the plurality of the movable doors collected within the setting time is less than or equal to the blockage alarm value; and
if so, controlling the blockage alarm to issue an alarm.

10. The method as claimed in claim 4 or 7, wherein the robot swimming pool cleaner further comprises a water pumping fault alarm, and the method further comprises:
if the water pumping device works abnormally, controlling the water pumping fault alarm to issue an alarm.
